# EUROPEAN PATENT SPECIFICATION

(11) **EP 1 932 195 B1**
(45) Date of publication and mention of the grant of the patent: **01.05.2013**
(21) Application number: 06815923.5
(22) Date of filing: 02.10.2006
(51) Int. Cl.: H01M 8/04

(54) **SCAVENGER MATERIALS IN FUEL CARTRIDGE**
SCAVENGER-MATERIALIEN IN EINER BRENNSTOFFKASSETTE
MATERIAUX D'EPURATION CONTENUS DANS UNE PILE A COMBUSTIBLE

(30) Priority: 05.10.2005 US 243766
(43) Date of publication of application: 18.06.2008
(73) Proprietor: Societé BIC S.A., 92611 Clichy (FR)
(72) Inventor: CURELLO, Andrew, J., Hamden, CT 06518 (US); STEPAN, Constance, R., Oxford, CT 06478 (US)
(74) Representative: Rupp, Christian
(86) International application number: PCT/US2006/038257
(87) International publication number: WO 2007/044265

(56) References cited:
- JP-A- 2003 051 333
- US-A- 4 594 297
- US-A- 4 594 297
- US-A1- 2003 121 481
- US-A1- 2003 121 481
- US-A1- 2004 155 065
- US-A1- 2004 155 065
- US-A1- 2005 118 468
- US-A1- 2005 118 468
- US-B1- 6 265 221

## Description

This invention generally relates to fuel supplies for fuel cells, and more particularly this invention relates to the use of scavenger materials inside disposable and refillable fuel cartridges.

### BACKGROUND OF THE INVENTION

Fuel cells are devices that directly convert chemical energy of reactants, *i.e*., fuel and oxidant, into direct current (DC) electricity. For a number of applications, fuel cells can be more efficient than conventional power generation, such as combustion of fossil fuel, as well as portable power storage, such as lithium-ion batteries.

In general, fuel cell technology includes a variety of different fuel cells, such as alkali fuel cells, polymer electrolyte fuel cells, phosphoric acid fuel cells, molten carbonate fuel cells, solid oxide fuel cells and enzyme fuel cells. Today's more important fuel cells can be divided into several general categories, namely (i) fuel cells utilizing compressed hydrogen (H₂) as fuel; (ii) proton exchange membrane (PEM) fuel cells that use alcohols, *e.g.*, methanol (CH₃OH), metal hydrides, *e.g.*, sodium borohydride (NaBH₄), hydrocarbons, or other fuels reformed into hydrogen fuel; (iii) PEM fuel cells that can consume non-hydrogen fuel directly or direct oxidation fuel cells; and (iv) solid oxide fuel cells (SOFC) that directly convert hydrocarbon fuels to electricity at high temperature.

Compressed hydrogen is generally kept under high pressure and is therefore difficult to handle. Furthermore, large storage tanks are typically required and cannot be made sufficiently small for consumer electronic devices. Conventional reformat fuel cells require reformers and other vaporization and auxiliary systems to convert fuels to hydrogen to react with oxidant in the fuel cell. Recent advances make reformer or reformat fuel cells promising for consumer electronic devices. The most common direct oxidation fuel cells are direct methanol fuel cells or DMFC. Other direct oxidation fuel cells include direct ethanol fuel cells and direct tetramethyl orthocarbonate fuel cells. SOFC convert hydrocarbon fuels, such as butane, at high heat to produce electricity. SOFC requires relatively high temperature in the range of 1000°C for the fuel cell reaction to occur.

The chemical reactions that produce electricity are different for each type of fuel cell. For DMFC, the chemical-electrical reaction at each electrode and the overall reaction for a direct methanol fuel cell are described as follows:

Half-reaction at the anode: CH₃OH + H₂O → CO₂ + 6H⁺ + 6e⁻

Half-reaction at the cathode: 1.5O₂ + 6H⁺ + 6e⁻ → 3H₂O

Overall fuel cell reaction: CH₃OH + 1.5O₂ → CO₂ + 2H₂O

Due to the migration of the hydrogen ions (H⁺) through the PEM from the anode to the cathode and due to the inability of the free electrons (e⁻) to pass through the PEM, the electrons flow through an external circuit, thereby producing an electrical current through the external circuit. The external circuit may be used to power many useful consumer electronic devices, such as mobile or cell phones, calculators, personal digital assistants, laptop computers, and power tools, among others.

DMFC is discussed in United States Patent Nos. 5,992,008 and 5,945,231. Generally, the PEM is made from a polymer, such as Nafion^{®} available from DuPont, which is a perfluorinated sulfonic acid polymer having a thickness in the range of about 0.05 mm to about 0.50 mm, or other suitable membranes. The anode is typically made from a Teflonized carbon paper support with a thin layer of catalyst, such as platinum-ruthenium, deposited thereon. The cathode is typically a gas diffusion electrode in which platinum particles are bonded to one side of the membrane.

In another direct oxidation fuel cell, borohydride fuel cell (DBFC) reacts as follows:

Half-reaction at the anode: BH₄- +8OH- → BO₂- + 6H₂O + 8e-

Half-reaction at the cathode: 2O₂ + 4H₂O + 8e- → 8OH-

In a chemical metal hydride fuel cell, aqueous sodium borohydride is reformed and reacts as follows: NaBH₄ + 2H₂O → (heat or catalyst) → 4(H₂) + (NaBO₂).

Half-reaction at the anode: H₂ → 2H⁺ + 2e⁻

Half-reaction at the cathode: 2(2H⁺ + 2e⁻) + O₂ → 2H₂O

Suitable catalysts for this reaction include platinum and ruthenium, and other metals. The hydrogen fuel produced from reforming sodium borohydride is reacted in the fuel cell with an oxidant, such as O₂, to create electricity (or a flow of electrons) and water byproduct. Sodium borate (NaBO₂) byproduct is also produced by the reforming process. A sodium borohydride fuel cell is discussed in United States Patent No. 4,261,956.

However, there remains a need to control pressure that can build over time inside a fuel cartridge.
Document US 2004/0155065 A1 shows a fuel reservoir for a liquid fuel cell particularly useful for portable electronic devices or for a reformer, includes a container defining a volume for holding a liquid fuel, a wicking structure positioned within the volume and into which at least one portion of the liquid fuel wicks and from which said liquid fuel subsequently may be metered, such as by pumping, a retainer to hold the wicking structure in a desired orientation within the container, and an outlet for the liquid fuel that is in communication with the wicking structure. The liquid fuel reservoir can contain an impurities scavenger in an outlet passageway or in a filter cartridge connected to an outlet passageway

### SUMMARY OF THE INVENTION

The present invention is directed to a fuel supply that is connectable to a fuel cell and that includes at least one fuel-contacting material, wherein the fuel-contacting material reduces vapor pressure generated by a stored fuel inside the fuel supply. An oxygen scavenger, a carbon dioxide scavenger, a transition metal scavenger, and/or a desiccant can be disposed to the fuel-contacting material.

### BRIEF DESCRIPTION OF THE DRAWINGS

The foregoing and other features and advantages of the invention will be apparent from the following description of the invention as illustrated in the accompanying drawings. The accompanying drawings, which are incorporated herein and form a part of the specification, further serve to explain the principles of the invention and to enable a person skilled in the pertinent art to make and use the invention.

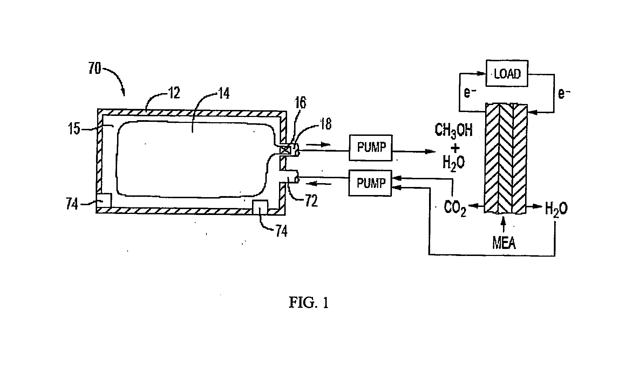

FIG. 1 is a schematic view of a multi-walled cartridge and fuel cell.

### DETAILED DESCRIPTION OF THE PREFERRED EMBODIMENTS

As illustrated in the accompanying drawings and discussed in detail below, the present invention is directed to a fuel supply, which stores fuel cell fuels, such as methanol, water, methanol/water mixtures of varying concentrations, methyl clathrates, *e.g*., as described in U.S. Patent Nos. 5,364,977 and 6,512,005 B2, and the like. Methanol and other alcohols are usable in many types of fuel cells, *e.g*., DMFC, enzyme fuel cells, and reformat fuel cells, among others. The fuel supply may contain other types of fuel cell fuels, such as ethanol or other alcohols, metal hydrides such as sodium borohydrides, other chemicals that can be reformatted into hydrogen, other chemicals that may improve the performance or efficiency of fuel cells, and combinations thereof. Fuels can also include potassium hydroxide (KOH) electrolyte, which is typically utilized in metal or alkali fuel cells, and which can be stored in fuel supplies. For metal fuel cells, fuel can typically be in the form of fluid-borne metallic (*e.g*., zinc) particles immersed in a KOH electrolytic reaction solution, and the anodes within the cell cavities can typically be particulate anodes formed of the metallic (*e.g*., zinc) particles. One type of KOH electrolytic solution is disclosed in published U.S. Patent Application No. 2003/0077493, entitled "Method of Using Fuel Cell System Configured to Provide Power to One or More Loads," published on April 24, 2003. Fuels can also include a mixture of methanol, hydrogen peroxide and sulfuric acid, which flows past a catalyst formed on silicon chips to create a fuel cell reaction. Moreover, fuels can include a blend or mixture of methanol, sodium borohydride, an electrolyte, and other compounds such as those described in U.S. Patent Nos. 6,554,877, 6,562,497, and 6,758,871. Furthermore, fuels can include those compositions that are partially dissolved and/or suspended in a solvent, *e.g*., as described in U.S. Patent No. 6,773,470, and mixed liquid-solid fuel compositions, *e.g*., as described in published U.S. Patent Application No. 2002/0076602.

Fuels can also include a metal hydride such as sodium borohydride (NaBH₄) and water, as discussed above. Fuels can further include hydrocarbon fuels, which include, but are not limited to, butane, kerosene, alcohol, natural gas, and the like, *e.g*., as described in published U.S. Patent Application No. 2003/0096150, entitled "Liquid Hereto-Interface Fuel Cell Device," published on May 22, 2003. Fuels can also include liquid oxidants that react with fuels. The present invention is therefore not limited to any type of fuels, electrolytic solutions, oxidant solutions, or liquids or solids contained in the supply or otherwise used by the fuel cell system. The term "fuel" as used herein includes all fuels that can be reacted in fuel cells or in the fuel supply, and includes, but is not limited to, any of the above suitable fuels, electrolytic solutions, oxidant solutions, gaseous, liquids, solids, and/or chemicals, as well as mixtures and reaction products thereof. Fuel, of course, can also include hydrogen.

As used herein, the term "fuel supply" includes, but is not limited to, disposable cartridges, refillable/reusable cartridges, containers, cartridges disposed inside an electronic device, removable cartridges, cartridges disposed outside of an electronic device, fuel tanks, fuel refilling tanks, other containers that store fuel, and the tubing connected to fuel tanks and containers. While a cartridge is described below in conjunction with the exemplary embodiments of the present invention, it is noted that these embodiments are also applicable to other fuel supplies, and that the present invention is not limited to any particular type of fuel supply.

The fuel supply of the present invention can also be used to store compounds (typically fuels) that are not used in typical electrochemical fuel cells. Such non-electrochemical fuel cell applications can include, but are not limited to, storing hydrocarbons and hydrogen fuels for micro gas-turbine engines built on silicon chips, *e.g*., as discussed in "Here Come the Microengines," published in The Industrial Physicist (Dec. 2001/Jan. 2002) at pp. 20-25. As used in the present application, the term "fuel cell" can also include microengines. Other non-electrochemical fuel cell applications can include storing traditional fuels for internal combustion engines and storing hydrocarbons such as butane for pocket and utility lighters and liquid propane.

As shown in FIG. 1, cartridge 70 comprises an outer tank, outer shell or outer casing 12 and an inner fuel container or inner bladder 14 containing fuel. Fuel container 14 is disposed within outer casing 12, and spacing 15 is defined between outer casing 12 and inner fuel container 14. Inner fuel container 14 is preferably flexible and may be elastic, such that the volume inside liner 14 decreases when fuel is being transported from the liner. Outer casing 12 also comprises a nozzle 16 that houses a shut-off valve 18, which is in fluid communication with liner 14. Nozzle 16 is adapted to be connected to a fuel cell or to a refilling fuel container/cartridge. The fuel (*e.g*., CH₃OH + H₂O) is pumped or flowed by other means out of nozzle 16 to react, optionally with O₂, at the membrane electrode assembly (MEA). Carbon dioxide and water (CO₂ + H₂O) are produced by the MEA and can be pumped back to cartridge 70 at intake nozzle 72. The CO₂ and excess H₂O byproducts can be stored, at least initially, in spacing 15 between outer casing 12 and inner liner 14. Since the volume of CO₂ and H₂O formed by the fuel cell reaction can be more than a cartridge of reasonable size can store, cartridge 70 also comprises at least one outlet relief valve 74. The CO₂ and H₂O byproducts can also flow back to the cartridge without pumping, due to the gaseous nature of the CO₂ (and at least some of the water being present as water vapor). Nozzles 16 and 72 can be located anywhere on the cartridge, and they can also be located co-axially to each other. The CO₂ and excess H₂O byproducts can also be vented to the atmosphere.

This fuel cartridge design, as well as other suitable fuel cartridge designs, is disclosed in commonly owned, co-pending U.S. Patent Application No. 10/629,004, entitled "Fuel Cartridge with Flexible Liner" and filed July 29, 2003. This invention relates to fuel cartridges with or without a fuel liner (bladder) fitted therein. The inner surface of the fuel liner is typically the fuel-contacting surface. However, in the absence of a fuel liner, the inner surface of the cartridge outer casing is typically the surface contacting the fuel.

It has been observed that, after being filled with methanol and generally prior to fuel consumption, the vapor pressure of the fuel liner, and/or of the fuel cartridge, typically increases over time. An analysis of the vapors inside the fuel bladders indicates that the gaseous components include air, water vapor, carbon dioxide, and hydrogen.

Taking into consideration the overall direct methanol fuel cell reaction,

CH₃OH + 1.5 O₂ → CO₂ + 2 H₂O

the present invention can help minimize the increased internal pressure inside the fuel liners and fuel cartridges. Without being bound by theory, the mechanism of alleviating internal pressure in DMFC involves the trapping of, the removal (reaction) of, or the prevention of formation of, reactive gases, reaction catalysts, and/or other compounds that increase internal pressure through incorporation of, for example: (a) suitable scavengers of oxygen, (b) suitable scavengers of carbon dioxide, (c) suitable scavengers of transition metals, (d) suitable desiccants of water, or (e) combinations thereof. The scavengers and/or desiccants can advantageously be incorporated among the valve(s), fuel liners or outer casings and preferably in physical contact with the fuel (*e.g*., within the material forming the fuel liners and/or outer casings, on one or more surfaces of the fuel liners and/or outer casings that are in physical contact with the fuel, optionally on one or more surfaces of the fuel liners and/or outer casings that are not in physical contact with the fuel but to or through which reactive gases and/or reaction catalysts can be exposed or can permeate).

Scavengers of oxygen have been used as additives to the water used to make steam in the food processing industry. *See, e.g.,* Steam Generation in Organic Food Processing Systems *available at* http://www.ams.usda.gov/nop/NationalList/TAPReviews/bacgroundpaper.pdf. Non-limiting examples of oxygen scavengers include sodium sulfite (Na₂SO₃), for example in combination with a catalyst, ethylenediaminetetraacetic acid (EDTA) (C₁₀H₁₆N₂O₈), and nitroloacetic acid (NTA) (C₂HNO₂). Other examples of oxygen scavengers include, but are not limited to, ascorbic acid (C₆H₈O₆), citric acid (C₆H₈O₇), and pyrogallol, or otherwise known as 1,2,3-trihydroxybenzene or pyrogallic acid (C₆H₆O₃). *See, e.g.,* Pyrogallol [87-66-1] Review of Toxicological Literature, *available at*
http://ntp.niehs.nih.gov/index.cfm?objectid=03DB78BD-C460-35EC-14052981B9EBFF23.

Another non-limiting example includes an oxygen scavenging coating layer disposed on the bladder or cartridge (*e.g*., as disclosed in U.S. Patent No. 6,333,087), which coating layer can include, but is not limited to, oxidizable polymers, ethylenically unsaturated polymers, benzylic polymers, allylic polymers, polybutadiene, poly[ethylene-methyl acrylate-cyclohexene acrylate] terpolymers, poly[ethylene-vinylcyclohexene] copolymers, poly β-pinene, poly α-pinene, polylimonene, resins, and combinations or copolymers thereof. In one embodiment, the oxygen scavenger can further contain a polymeric backbone, cyclic olefinic pendent groups, and linking groups linking the olefinic pendent groups to the polymeric backbone.

In one embodiment, the polymeric backbone can be formed from olefinic monomers such as ethylene, other vinyl monomers such as styrene, or combinations or copolymers thereof. In one preferred embodiment, the oxygen scavenging material can be incorporated into the outer casing or liner as a scavenger-containing film/layer. In another embodiment, the oxygen scavenging material can be incorporated in the form of a strip attached to the container's interior surface, *e.g*., by adhesives or the like. In another embodiment, the oxygen scavenging material can be incorporated in the form of a layer of the cartridge or liner's interior surface.

Examples of cyclic olefinic pendent groups can include, but are not limited to, those having structure (I): 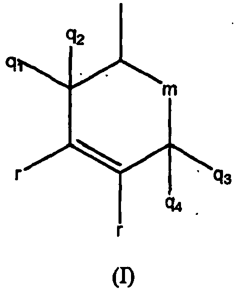 where q₁, q₂, q₃, q₄, and r can independently be -H, -CH₃, and/or -C₂H₅ ; and where m can include -(CH₂)ₙ-, with n being an integer in the range from 0 to 4; and wherein, when r is - H, at least one of q₁, q₂, q₃, and q₄ is also -H.

Examples of linking groups can include, but are not limited to: -(C=O)-O-(CHR)ₙ-; -O-(CHR)ₙ-; -NH-(CHR)ₙ-; -O-(C=O)-(CHR)ₙ-; -(C=O)-NH-(-CHR)ₙ-; and/or -(C=O)-O-CHOH-CH₂-O-; wherein R is hydrogen or a C₁-C₄ alkyl group, and wherein n can be an integer in the range from 1 to 12.

Oxygen scavengers according to the invention may further contain other components, such as photoinitiators (which can further facilitate and/or control the initiation of oxygen scavenging properties), antioxidants (which can prevent premature oxidation during processing), and the like, and combinations thereof.

When present, suitable photoinitiators can include, but are not necessarily limited to, benzophenone, o-methoxy-benzophenone, dibenzoyl biphenyl, substituted dibenzoyl biphenyl, benzoylated terphenyl, substituted benzoylated terphenyl, tribenzoyl triphenylbenzene, substituted tribenzoyl triphenylbenzene, benzoylated styrene oligomer (a mixture of compounds containing from 2 to 12 repeating styrenic groups, comprising dibenzoylated 1,1-diphenyl ethane, dibenzoylated 1,3-diphenyl propane, dibenzoylated 1-phenyl naphthalene, dibenzoylated styrene dimer, dibenzoylated styrene trimer, and tribenzoylated styrene trimer), substituted benzoylated styrene oligomers, acetophenone, o-methoxy-acetophenone, acetophenone, methyl ethyl ketone, valerophenone, hexanophenone, α-phenyl-butyrophenone, p-morpholinopropiophenone, dibenzosuberone, 4-morpholinobenzophenone, benzoin, benzoin methyl ether, 4-o-morpholinodeoxybenzoin, p-diacetylbenzene, 4-aminobenzophenone, 4'-methoxyacetophenone, substituted and unsubstituted anthraquinones, α-tetralone, 9-acetylphenanthrene, 2-acetylphenanthrene, 10-thioxanthenone, 3-acetyl-phenanthrene, 3-acetylindole, 9-fluorenone, 1-indanone, 1,3,5-triacetylbenzene, thioxanthen-9-one, xanthene-9-one, 7-H-benz[de]anthracen-7-one, benzoin tetrahydropyranyl ether, 4,4'-bis(dimethylamino)benzophenone, 1'-acetonaphthone, 2'-acetonaphthone, acetonaphthone and 2,3-butanedione, benz[a]anthracene-7,12-dione, 2,2-dimethoxy-2-phenylacetophenone, α,α-diethoxy-acetophenone, α,α-dibutoxyacetophenone, those photoinitiators having at least two substituted (*e.g*., including halides or alkyl, aryl, alkoxy, phenoxy, or alicylic groups having from 1 to 24 carbon atoms) or unsubstituted benzophenone groups as disclosed in U.S. Patent No. 6,139,770, and the like, and combinations thereof. Singlet oxygen generating photosensitizers such as Rose Bengal, methylene blue, and tetraphenyl phosphine may additionally or alternately be used as photoinitiators. Polymeric photoinitiators can include polyethylene carbon monoxide and oligo[2-hydroxy-2-methyl-1-[4-(1-methylvinyl)phenyl]-propanone]. When used, a photoinitiator can often provide faster and/or more efficient initiation of oxygen scavenging properties.

Antioxidants may be incorporated into the scavenging compositions, *e.g*., to control degradation of the components during compounding and shaping. An antioxidant, as defined herein, includes any material that inhibits oxidative degradation and/or crosslinking of polymers. Typically, such antioxidants are added into polymer resins to facilitate the processing of polymeric materials and/or to prolong their useful lifetime. Examples of antioxidants suitable for use with this invention can include, but are not limited to, Vitamin E (tocopherol) and derivatives thereof, those products sold under the tradename Irganox such as Irganox® 1010, 2,6-di(t-butyl)-4-methyl-phenol(BHT), 2,2'-methylene-bis(6-t-butyl-p-cresol), triphenylphosphite, tris-(nonylphenyl)phosphate, tetra-bismethylene-3-(3,5-ditertbutyl-4-hydroxyphenyl)-propionate methane, dilaurylthiodipropionate, and the like, and combinations thereof.

The oxygen scavenging composition also comprises a photoinitiator. Suitable photoinitiators are well known to those skilled in the art. Specific examples include, but are not limited to, benzophenone, o-methoxybenzophenone, acetophenone, o-methoxy-acetophenone, acenaphthenequinone, methyl ethyl ketone, valerophenone, hexanophenone, α-phenyl-butyrophenone, p-morpholinopropiophenone, dibenzosuberone, 4-morpholinobenzophenone, benzoin, benzoin methyl ether, 4-o-morpholinodeoxybenzoin, p-diacetylbenzene, 4-aminobenzophenone, 4'-methoxyacetophenone, α-tetralone, 9-acetylphenanthrene, 2-acetylphenanthrene, 10-thioxanthenone, 3-acetylphenanthrene, 3-acetylindole, 9-fluorenone, 1-indanone, 1,3,5-triacetylbenzene, thioxanthen-9-one, xanthene-9-one, 7-H-benz[de]anthracen-7-one, benzoin tetrahydropyranyl ether, 4,4'-bis(dimethylamino)-benzophenone, 1'-acetonaphthone, 2'-acetonaphthone, acetonaphthone and 2,3-butanedione, benz[a]anthracene-7,12-dione, 2,2-dimethoxy-2-phenylacetophenone, α,α-diethoxy-acetophenone, and α,α-dibutoxyacetophenone, among others. Singlet oxygen generating photosensitizers such as Rose Bengal, methylene blue, and tetraphenyl porphine may also be employed as photoinitiators. Polymeric initiators can include poly(ethylene carbon monoxide) and oligo[2-hydroxy-2-methyl-1-[4-(1-methylvinyl)phenyl]propanone], among others.

Another example of an oxygen scavenger includes a diphenyl ketone, which is stable to further oxidation and hydrolysis, as discussed in U.S. Patent No. 6,607,795. As a result, this type of oxygen scavenger is non-toxic and can be used as a food additive without the effects of bad tastes and bad odor. *See* "Tasteless Oxygen Scavenging Polymers: A New Platform Technology For Food Packaging Based on Controlled Oxidation, 2001 and Beyond," Oxygen Scavenging Polymers Conference, pp. 1-8.

In another embodiment, the oxygen scavenging material can include polymeric Bisphenol A analogs having repeat units containing methylene bis(4-[functional]phenyl) groups, a transition metal oxidation catalyst, and a photoinitiator having a wavelength of maximum absorption of electromagnetic radiation from about 200 nm to about 750 nm, wherein the [functional] groups can independently be (or react to form) -O-, -C(=O)O-, -NH-, -NHC(=O)-, -NHC(=O)O-, and -NR- groups, and wherein R can be hydrogen or a C₁-C₆ alkyl group.

It has been observed that polymeric Bisphenol A analogs containing methylene bis(4-[functional]phenyl) groups are capable of scavenging oxygen, and thus, in addition to other applications, it is useful in oxygen scavenging or active oxygen barrier packaging applications. Without being bound by theory, it is believed that the polymer containing methylene bis(4-[functional]phenyl) groups can scavenge oxygen through oxidation of the methylene moiety to form a carboxy moiety, resulting in diphenyl ketone repeat units, such as carboxy bis(4-[functional]phenyl) groups. Without being bound by theory, the ketone is believed to be very stable toward further oxidation and hydrolysis. As a result, the oxygen scavenging event does not result in substantial fragmentation of the polymer. This is in contrast to the prior art, which generally reports oxidation leading to a polymer structure that becomes more susceptible toward further oxidation and hydrolysis, eventually leading to fragmentation and the generation of volatile components.

In another embodiment, the oxygen scavenging material can include repeat units containing carboxy bis(4-[functional]phenyl) groups and aliphatic or aromatic hydrocarbon or substituted hydrocarbon groups, preferably C₂-C₁₂ hydrocarbons or substituted hydrocarbons. By "substituted hydrocarbon" is meant a hydrocarbon comprising one or more heteroatoms, including, but not limited to, oxygen, nitrogen, silicon, and halogens. In a preferred embodiment, the [functional] groups can independently be (or react to form) -O-, -C(=O)O-, -NHC(=O)-, or -NHC(=O)O- groups. For example, polyformal is a preferred polyether.

In another embodiment, the oxygen scavenging material can include both carboxy bis(4-[functional]phenyl) ("carboxy") repeat units and methylene bis(4-[functional]phenyl) ("methylene") repeat units in a carboxy to methylene proportion, for example, from about 1:99 mol% to about 99:1 mol%. In another embodiment, the proportion of carboxy to methylene repeat units can be from about 40:60 mol% to about 60:40 mol%.

When used in combination with one or more of the aforementioned polymers, the transition metal oxidation catalyst should not also function as a catalyst for the fuel cell reaction. The transition metal oxidation catalyst, when present, can advantageously readily interconvert between at least two oxidation states. When present, the transition metal oxidation catalyst is typically in the form of a salt, with the transition metal being selected from the first, second, or third transition series of the Periodic Table. Suitable transition metals include, but are not limited to, manganese, iron, cobalt, nickel, copper, rhodium, and combinations thereof. The oxidation state of the transition metal when introduced need not necessarily be that of the (re)active form. The transition metal can preferably be iron, nickel, manganese, cobalt, or copper, more preferably manganese or cobalt, and most preferably cobalt.

Suitable counterions for the transition metal salt can include, but are not limited to, chloride, acetate, oleate, stearate, palmitate, 2-ethylhexanoate, neodecanoate, or naphthenate, preferably C₁-C₂₀ alkanoates. Particularly preferable transition metal salts, when present, include cobalt oleate, cobalt stearate, cobalt 2-ethylhexanoate, and cobalt neodecanoate.

When present, the amount of transition metal oxidation catalyst may typically range from about 0.00 1 % to about 1% (about 10 to about 10,000 ppm) of the oxygen scavenging composition, based on the metal content only (excluding ligands, counterions, etc.).

Other suitable oxygen scavengers can include, but are not limited to: (a) nickel metal (*e.g*., as disclosed in U.S. Patent No. 6,744,235), *e.g*., in the form of nickel metal foam, nickel wire, or nickel mesh; (b) organometallic ligands, including, but not limited to, the transition metal oxidation catalysts described above, the natural Fe-porphyrin in hemoglobin, and the synthetic "picket-fence" Fe-porphyrin; (c) polymer blends, *e.g*., polyester-nylon mixtures such as the OXBAR system (which includes MXD6 nylon melt-blended with PET at around the 5% level, also including a catalyst such as a cobalt salt added at a low concentration, *e.g*., less than 200 ppm, that supposedly triggers MXD6 oxidation; *see* U.S. Patent No. 6,083,585; *see also* "Smart Packaging - Intelligent Packaging for Food, Beverages, Pharmaceuticals and Household Products," available at http://www.azom.com/details.asp?ArticleID=2152); and combinations thereof.

Scavengers of carbon dioxide can include, but are not limited to, lithium hydroxide (LiOH), cyclohexylamine, ethanolamine (C₂H₇NO), diethylaminoethanol (DEAE) (C₆H₁₅NO), and morpholine (C₄H₉NO). Additional examples of amines that may be used as scavengers of carbon dioxide may be found in "Global Supplier of Amines and Amine Technology" by Atofina, available at www.e-organicchemicals.com/thio/tds/499.pdf.

Scavengers of transition metals can include, but are not limited to, functionalized silicon-containing compounds, such as those commercially available from Silicycle of Quebec City, Quebec, Canada (*see* Table 1 below).

| **Name of Metal Scavenger** | **Metals Removed** | **Structure** |
|---|---|---|
| *Si*-Triamine | Pb, Ru, Co, Hg, Pd | 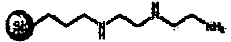 |
| *Si*-Diamine | Zn, Ni(II), Pb, Cd, Hg | 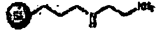 |
| *Si*-Thiol | Pd, Pt, Cu, Ag, Pb | 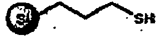 |
| *Si*-EDAB | Palladium | 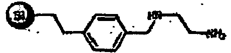 |
| *Si*-TAAcOH | Pd(0), Ni(0), Cu | 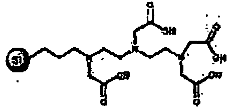 |
| *Si*-TAAcONa | Pd(II), Ni(II), Cu | 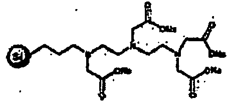 |
| *Si*-Thiourea | Pd, Pt, Rh, Ru, Hg | 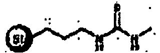 |

Transition metals that can be bound and/or inactivated by these scavengers include palladium (II), palladium (0), tin, zinc, lead, nickel (II), nickel (0), platinum, copper, cadmium, cobalt, rhodium, ruthenium, silver, and mercury. *See, e*.*g*., Metal Scavenger Selection Guide, *available at*
http://www.silicycle.com/html/english/products/product line.php?cat id=15.

For Zr and other metals, scavengers sold under the tradename CombiZorb S (commercially available from Agilent Technologies of Wilmington, DE) may be used. *See* Use of Reaction Scavengers to Speed Synthesis and Bioactivity Screening in Drug Development, available at http://www.iscpubs.com/articles/abl/b0008sza.pdf*.*

Scavengers for water, or desiccants, may be used to bind and/or inactivate water from the fuel bladder. The most commonly used desiccant is silica gel, which includes silicon dioxide (SiO₂). Silica gel has the capacity to absorb up to about 40% of its weight in moisture or more. *See* Types of Desiccants, *available at* htttp://waltonfeed.com/grain/faqs/ivd2.html.

Other examples of desiccants include, but are not limited to, smectite clays (such as saponite, hectorite, mica, bentonite, nontronite, beidellite, volkonskoite, magadite, kenyaite, and the like), and layered phyllosilicate clays (Strunz classification VIII/H or Dana classification 71) such as vermiculite, montmorillonite, and the like. Montmorillonite desiccant has the capacity to absorb up to about 25% of its weight in water vapor at 77 °F and 40% relative humidity. In some embodiments, especially where the clay desiccant is present within a polymeric liner or bladder, the clay (*e.g*., montmorillonite) can be modified to present an organic surface such that polymeric materials can intercalate and/or exfoliate the clay crystals. Intercalated and/or exfoliated clays can have increased efficiency not only as desiccants but also as barrier agents for decreasing vapor (*e.g*., air, water, carbon dioxide, etc.) permeability through the polymeric material forming the liner/bladder. Such modified clays are available from various companies including Nanocor, Inc., Southern Clay Products, Kunimine Industries, Ltd., and Rheox. *See, e.g.,* U.S. Patent No. 6,387,996.

Another example of a desiccant includes calcium oxide (CaO), or "quicklime," which is a strong adsorbent. It will adsorb up to about 28% of its weight in moisture, but does it slowly over a period of several days rather than a matter of hours like other desiccants. Another example of a desiccant includes calcium sulfate (CaSO₄), sold under the tradename "Drierite," which is another naturally occurring mineral. It is produced by the controlled dehydration of gypsum. It is chemically stable and does not readily release its adsorbed moisture, and has a capacity of about 10% of it weight in moisture.

Other non-limiting examples of desiccants include magnesium sulfate and phosphorus pentoxide (P₂O₅).

Another chemical compound that can be used according to the invention includes iodine.

It is noted that most polymeric resinous materials, such as those that may form the fuel liner/bladder, the outer tank/casing, the nozzle, or any other components of a fuel cell cartridge, may contain small concentrations of chemical compounds that are characterized as any of the scavengers disclosed above (*e.g*., antioxidants are typically added as processing aids in processed polymeric articles to reduce propensity for oxidation associated with increased processing temperatures). Nevertheless, when scavengers according to the invention are added during formation of a polymeric component of a fuel cell where such chemical compounds would already be present, it should be understood that the scavengers according to the invention are additionally introduced, over and above any pre-existing concentration of the chemical compounds, to attain a concentration greater than that necessary for achieving the original purpose of such chemical compounds in the polymeric component. For example, where a fuel liner/bladder is made from a polymeric resinous material containing a certain concentration of antioxidants, and where it is desired to introduce additional antioxidants as scavenger materials according to the invention, the resulting total concentration of antioxidants in the polymeric fuel liner/bladder is necessarily (and preferably substantially) greater than the concentration necessary for preventing or inhibiting processing-based oxidation. In this manner, the total concentration of chemical compounds that can be characterized as scavengers will typically exceed (for example, may be about double or greater than) that concentration of chemical compounds that would previously have been present and that would reasonably have been associated with the originally-intended purpose of those chemical compounds (*e.g*., the total scavenger content would typically exceed, and preferably substantially so, the content of antioxidants that would have been present as processing aids).

In one embodiment, one or more scavengers can be added to a polymer resin before its processing into a fuel cell component in an amount from about 1% to about 20% by weight, for example from about 2% to about 15% by weight, based on the weight of the polymer resin. In another embodiment, one or more scavengers can be added to a polymer resin before its processing into a fuel cell component in an amount from about 0.5% to about 18% by weight not including any amount that would be present as a processing aid, for example from about 1% to about 15% by weight not including any amount that would be present as a processing aid, based on the total weight of the polymer resin including any amount present as a processing aid.

While it is apparent that the illustrative embodiments of the invention disclosed herein fulfill the objectives of the present invention, it is appreciated that numerous modifications and other embodiments may be devised by those skilled in the art. Additionally, feature(s) and/or element(s) from any embodiment may be used singly or in combination with other embodiment(s). Therefore, it will be understood that the appended claims are intended to cover all such modifications and embodiments, which would come within the scope of the present invention.

## Claims

1. A fuel supply connectable to a fuel cell and comprising at least one fuel-contacting material, wherein the fuel-contacting material reduces vapor pressure generated by a stored fuel inside the fuel supply and comprises a chemical compound comprising at least one of an oxygen scavenger, a carbon dioxide scavenger, a transition metal scavenger, and a desiccant.

2. The fuel supply of claim 1, wherein the at least one fuel-contacting material forms at least a part of an inner fuel container.

3. The fuel supply of claim 1, wherein the at least one fuel-contacting material forms at least a part of an outer casing.

4. The fuel supply of claim 2, wherein the at least one fuel-contacting material further forms a part of an outer casing.

5. The fuel supply of claim 1, wherein the at least one fuel-contacting material comprises an oxygen scavenger and a carbon dioxide scavenger.

6. The fuel supply of claim 1, wherein the at least one fuel-contacting material comprises an oxygen scavenger and a desiccant.

7. The fuel supply of claim 1, wherein the at least one fuel-contacting material comprises an oxygen scavenger, a carbon dioxide scavenger, and a desiccant.

8. The fuel supply of claim 1, wherein the at least one fuel-contacting material comprises an oxygen scavenger, a carbon dioxide scavenger, a transition metal scavenger, and a desiccant.

9. The fuel supply of claim 1, wherein the oxygen scavenger is present and comprises sodium sulfite, ethylenediaminetetraacetic acid, nitroloacetic acid, ascorbic acid, citric acid, pyrogallic acid, hydrazine, a mixture of finely divided moist ferrous oxide and potassium, nickel metal, a transition metal salt, Fe-porphyrin, a diphenylketone, a polymeric Bisphenol A analog, a poly(diphenyl ketone), a blend of polyethylene terephthalate and poly(m-xyleneadipamide), an oxidizable polymer, an ethylenically unsaturated polymer, a benzylic polymer, an allylic polymer, polybutadiene, a poly[ethylene-methyl acrylate-cyclohexene acrylate] terpolymer, a poly[ethylene-vinylcyclohexene] copolymer, a polylimonene resin, poly β-pinene, poly α-pinene, polyformal, and a combination of a polymeric backbone, cyclic olefinic pendent groups and linking groups linking the olefinic pendent groups to the polymeric backbone.

10. The fuel supply of claim 1, wherein the carbon dioxide scavenger is present and comprises lithium hydroxide, cyclohexylamine, ethanolamine, diethylaminoethanol, morpholine, or a combination thereof.

11. The fuel supply of claim 1, wherein the transition metal ion scavenger is present and comprises *Si*-Triamine, *Si*-Diamine, *Si*-Thiol, *Si*-TAAcOH, *Si*-TAAcONa, *Si*-Thiourea, Combizorb S, or a combination thereof.

12. The fuel supply of claim 1, wherein the desiccant is present and comprises silica, silica gel, magnesium aluminum silicate, calcium oxide, calcium sulfate, magnesium sulfate, phosphorus pentoxide, a smectite clay, a layered phyllosilicate clay, an organically modified clay, an intercalated clay, an exfoliated clay, or a combination thereof.

13. The fuel supply of claim 1, wherein the at least one fuel-contacting material comprises iodine.

14. The fuel supply of claim 2, wherein the at least fuel-contacting material is disposed within or on a surface of the inner fuel container.

15. The fuel supply of claim 3, wherein the at least fuel-contacting material is disposed within or on a surface of the outer casing.

16. The fuel supply of claim 1, wherein the at least one fuel-contacting material forms a part of a valve.

17. The fuel supply of claim 9 further comprising at least one photoinitiator.

18. The fuel supply of claim 17 wherein the photoinitator is selected from the group consisting of benzophenone, o-methoxy-benzophenone, dibenzoyl biphenyl, substituted dibenzoyl biphenyl, benzoylated terphenyl, substituted benzoylated terphenyl, tribenzoyl triphenylbenzene, substituted tribenzoyl triphenylbenzene, benzoylated styrene oligomers, substituted benzoylated styrene oligomers, acetophenone, o-methoxy-acetophenone, acetophenone, methyl ethyl ketone, valerophenone, hexanophenone, α-phenyl-butyrophenone, p-morpholinopropiophenone, dibenzosuberone, 4-morpholinobenzophenone, benzoin, benzoin methyl ether, 4-o-morpholinodeoxybenzoin, p-diacetylbenzene, 4-aminobenzophenone, 4'-methoxyacetophenone, substituted and unsubstituted anthraquinones, α-tetralone, 9-acetylphenanthrene, 2-acetylphenanthrene, 10-thioxanthenone, 3-acetyl-phenanthrene, 3-acetylindole, 9-fluorenone, 1-indanone, 1,3,5-triacetylbenzene, thioxanthen-9-one, xanthene-9-one, 7-H-benz[de]anthracen-7-one, benzoin tetrahydropyranyl ether, 4,4'-bis(dimethylamino)-benzophenone, 1'-acetonaphthone, 2'-acetonaphthone, acetonaphthone and 2,3-butanedione, benz[a]anthracene-7,12-dione, 2,2-dimethoxy-2-phenylacetophenone, α,α-diethoxy-acetophenone, α,α-dibutoxyacetophenone, Rose Bengal, methylene blue, tetraphenyl phosphine, poly(ethylene-co-carbon monoxide), and oligo[2-hydroxy-2-methyl-1-[4-(1-methylvinyl)phenyl]propanone].

19. The fuel supply of claim 9 further comprising at least one antioxidant.

20. The fuel supply of claim 19 wherein the antixodiant is selected from the group consistin of 2,6-di(t-butyl)-4-methylphenol, 2,2'-methylene-bis(6-t-butyl-p-cresol), triphenylphosphite, tris-(nonylphenyl)phosphite, vitamin E, tetra-bismethylene 3-(3,5-ditertbutyl-4-hydroxyphenyl)-propionate methane, and dilaurylthiodipropionate.

## Patentansprüche

1. Brennstoffzufuhr, die mit einer Brennstoffzelle verbindbar ist und wenigstens ein den Brennstoff kontaktierendes Material aufweist, wobei das den Brennstoff kontaktierende Material den von einem gespeicherten Brennstoff erzeugten Dampfdruck innerhalb der Brennstoffzufuhr verringert und eine chemische Verbindung aufweist, die wenigstens einen der Stoffe Sauerstoffspülmittel, Kohlendioxidspülmittel, Übergangsmetallspülmittel und Trocknungsmittel enthält.

2. Brennstoffzufuhr gemäß Anspruch 1, wobei das wenigstens eine den Brennstoff kontaktierende Material wenigstens einen Teil eines inneren Brennstoffbehälters bildet.

3. Brennstoffzufuhr gemäß Anspruch 1, wobei das wenigstens eine den Brennstoff kontaktierende Material wenigstens einen Teil eines Außengehäuses bildet.

4. Brennstoffzufuhr gemäß Anspruch 2, wobei das wenigstens eine den Brennstoff kontaktierende Material weiterhin einen Teil eines Außengehäuses bildet.

5. Brennstoffzufuhr gemäß Anspruch 1, wobei das wenigstens eine den Brennstoff kontaktierende Material ein Sauerstoffspülmittel und ein Kohlendioxidspülmittel enthält.

6. Brennstoffzufuhr gemäß Anspruch 1, wobei das wenigstens eine den Brennstoff kontaktierende Material ein Sauerstoffspülmittel und ein Trocknungsmittel enthält.

7. Brennstoffzufuhr gemäß Anspruch 1, wobei das wenigstens eine den Brennstoff kontaktierende Material ein Sauerstoffspülmittel, ein Kohlendioxidspülmittel und ein Trocknungsmittel enthält.

8. Brennstoffzufuhr gemäß Anspruch 1, wobei das wenigstens eine den Brennstoff kontaktierende Material ein Sauerstoffspülmittel, ein Kohlendioxidspülmittel, ein Übergangsmetallspülmittel und ein Trocknungsmittel enthält.

9. Brennstoffzufuhr gemäß Anspruch 1, wobei das Sauerstoffspülmittel vorliegt und Natriumsulfit, Ethylendiamintetraessigsäure, Nitrolessigsäure, Ascorbinsäure, Zitronensäure, Pyrogallussäure, Hydrazin, eine Mischung aus fein verteiltem feuchtem Eisenoxid und Kalium, Nickelmetall, ein Übergangsmetallsalz, Fe-Porphyrin, ein Diphenylketon, ein polymeres Bisphenol A Analogon, ein Poly(diphenylketon), eine Mischung aus Polyethylenteraphthalat und Poly(m-Xylenadipamid), ein oxidierbares Polymer, ein ethylenisch ungesättigtes Polymer, ein benzylisches Polymer, ein allylisches Polymer, Polybutadien, ein Poly[ethylen-Methylacrylat-Cyclohexenacrylat]-Terpolymer, ein Poly[ethylen-Vinylcyclohexen]-Copolymer, ein Polylimonenharz, Poly-β-Pinen, Poly-α-Pinen, Polyformal sowie eine Kombination aus einem polymeren Hauptstrang, zyklischen olefinischen Hängegruppen und Bindungsgruppen, die die olefinischen Hängegruppen mit dem polymeren Hauptstrang verbinden, aufweist.

10. Brennstoffzufuhr gemäß Anspruch 1, wobei das Kohlendioxidspülmittel vorliegt und Lithiumhydroxid, Cyclohexylamin, Ethanolamin, Diethylaminoethanol, Morpholin oder eine Kombination aus diesen aufweist.

11. Brennstoffzufuhr gemäß Anspruch 1, wobei das
Übergangsmetallionerispülmittel vorliegt und *Si*-Triamin, *Si*-Diamin, *Si*-Thiol, *Si*-TAAcOH, *Si*-TAAcONa, *Si*-Thiourea, Combizorb S oder eine Kombination aus diesen aufweist.

12. Brennstoffzufuhr gemäß Anspruch 1, wobei das Trocknungsmittel vorliegt und Kieselerde, Kieselgel, Magnesiumaluminiumsilikat, Kalziumoxid, Kalziumsulfat, Magnesiumsulfat, Phosphorpentoxid, eine Bleicherde, einen Phyllosilikat-Schichtton, einen organisch veränderten Ton, einen eingelagerten Ton, einen abgeblätterten Ton oder eine Kombination aus diesen umfasst.

13. Brennstoffzufuhr gemäß Anspruch 1, wobei das wenigstens eine den Brennstoff kontaktierende Material Jod umfasst.

14. Brennstoffzufuhr gemäß Anspruch 2, wobei das wenigstens eine den Brennstoff kontaktierende Material innerhalb oder an einer Oberfläche des inneren Brennstoffbehälters angeordnet ist.

15. Brennstoffzufuhr gemäß Anspruch 3, wobei das wenigstens eine den Brennstoff kontaktierende Material innerhalb oder an einer Oberfläche des Außengehäuses angeordnet ist.

16. Brennstoffzufuhr gemäß Anspruch 1, wobei das wenigstens eine den Brennstoff kontaktierende Material einen Teil eines Ventils bildet.

17. Brennstoffzufuhr gemäß Anspruch 9, weiterhin mit wenigstens einem Photoinitiator.

18. Brennstoffzufuhr gemäß Anspruch 17, wobei der Photoinitiator aus der Gruppe bestehend aus Benzophenon, o-Methoxy-Benzophenon, Dibenzoylbiphenyl, substituiertem Dibenzoylbiphenyl, benzoyliertem Terphenyl, substituiertem benzoyliertem Terphenyl, Tribenzoyltriphenylbenzol, substituiertem Tribenzoyltriphenylbenzol, benzoylierten Styrololigomeren, substitutierten benzoylierten Styrololigomeren, Azetophenon, o-Methoxy-Azetophenon, Azetophenon, Methylethylketon, Valerophenon, Hexanophenon, α-Phenyl-Butyrophenon, p-Morpholinpropiophenon, Dibenzosuberon, 4-Morpholinbenzophenon, Benzoin, Benzoinmethylether, 4-o-Morpholindeoxybenzoin, p-Diazetylbenzol, 4-Aminobenzophenon, 4'-Methoxyazetophenon, substituierten und nicht substitutierten Anthrachinonen, α-Tetralon, 9-Azetylphenanthren, 2-Azetylphenanthren, 10-Thioxanthenon, 3-Azetyl-Phenanthren, 3-Azetylindol, 9-Fluorenon, 1-Indanon, 1,3,5-Triazetylbenzol, Thioxanthen-9-on, Xanthen-9-on, 7-H-Benz[de]anthrazen-7-on, Benzoin-Tetrahydropyranylether, 4,4'-Bis(Dimethylamino)-Benzophenon, 1'-Azetonaphthon, 2'-Azetonaphthone, Azetonaphthon und 2,3-Butandion, Benz[a]anthrazen-7,12-Dion, 2,2-Dimethoxy-2-Phenylazetophenon, α,α-Diethoxy-Azetophenon, α,α-Dibutoxyazetophenon, Bengalische Rose, Methylenblau, Tetraphenylphosphin, Poly(ethylen-co-kohlenmonoxid) und Oligo[2-Hydroxy-2-Methyl-1-[4-(1-Methylvinyl)phenyl]propanon] ausgewählt ist.

19. Brennstoffzufuhr gemäß Anspruch 9, weiterhin mit wenigstens einem Antioxidans.

20. Brennstoffzufuhr gemäß Anspruch 19, wobei das Antioxidans aus der Gruppe bestehend aus 2,6-Di(t-Butyl)-4-Methylphenol, 2,2'-Methylen-bis(6-t-Butyl-p-Cresol), Triphenylphosphit, Tris-(Nonylphenyl)phosphit, Vitamin E, Tetra-Bismethylen 3-(3,5-Ditertbutyl-4-Hydroxyphenyl)-Propionatmethan sowie Dilaurylthiodipropionat ausgewählt ist.

## Revendications

1. Alimentation en combustible pouvant être raccordée à une pile à combustible et comprenant au moins un matériau en contact avec le combustible, dans laquelle le matériau en contact avec le combustible réduit la pression de vapeur générée à l'intérieur de l'alimentation en combustible par un combustible stocké et comprend un composé chimique comprenant au moins un absorbeur d'oxygène, un absorbeur de dioxyde de carbone, un absorbeur de métal de transition ou un déshydratant.

2. Alimentation en combustible selon la revendication 1, dans laquelle le matériau en contact avec le combustible forme au moins une partie intérieure d'un conteneur de combustible.

3. Alimentation en combustible selon la revendication 1, dans laquelle le matériau en contact avec le combustible forme au moins une partie d'un boîtier extérieur.

4. Alimentation en combustible selon la revendication 2, dans laquelle le matériau en contact avec le combustible forme en outre une partie d'un boîtier extérieur.

5. Alimentation en combustible selon la revendication 1, dans laquelle le matériau en contact avec le combustible comprend un absorbeur d'oxygène et un absorbeur de dioxyde de carbone.

6. Alimentation en combustible selon la revendication 1, dans laquelle le matériau en contact avec le combustible comprend un absorbeur d'oxygène et un déshydratant.

7. Alimentation en combustible selon la revendication 1, dans laquelle le matériau en contact avec le combustible comprend un absorbeur d'oxygène, un absorbeur de dioxyde de carbone, et un déshydratant.

8. Alimentation en combustible selon la revendication 1, dans laquelle le matériau en contact avec le combustible comprend un absorbeur d'oxygène, un absorbeur de dioxyde de carbone, un absorbeur de métal de transition, et un déshydratant.

9. Alimentation en combustible selon la revendication 1, dans laquelle l'absorbeur d'oxygène est présent et comprend du sulfite de sodium, de l'acide éthylènediaminetétraacétique, de l'acide nitroloacétique, de l'acide ascorbique, de l'acide citrique, de l'acide pyrogallique, de l'hydrazine, un mélange finement divisé d'oxyde ferreux humide et de potassium, du métal nickel, un sel de métal de transition, de la porphyrine de fer, une diphénylcétone, un analogue du bisphénol A polymère, une poly(diphényl)cétone, un mélange de téréphthalate de polyéthylène et poly(m-xylèneadipamide), un polymère oxydable, un polymère éthyléniquement insaturé, un polymère benzylique, un polymère allylique, du polybutadiène, un terpolymère de poly[éthylène-acrylate de méthyle- cyclohexène acrylate], un copolymère de poly[éthylène-vinylcyclohexène], une résine polylimonène, poly β-pinène, poly α-pinène, polyformal, et une combinaison d'une chaîne polymère principale, de groupes pendants oléfiniques cycliques et de groupes de liaison liant les groupes oléfiniques pendants à la chaîne polymère principale.

10. Alimentation en combustible selon la revendication 1, dans laquelle l'absorbeur de dioxyde de carbone est présent et comprend de l'hydroxyde de lithium, du cyclohexylamine, de l'éthanolamine, du diéthylaminoéthanol, de la morpholine, ou une combinaison de ceux-ci.

11. Alimentation en combustible selon la revendication 1, dans laquelle l'absorbeur d'ions de métal de transition est présent et comprend du *Si*-Triamine, du *Si*-Diamine, du *Si*-Thiol, du *Si*-TAAcOH, du *Si*-TAAcONa, de la *Si*-Thiourée, du Combizorb S ou une combinaison de ceux-ci.

12. Alimentation en combustible selon la revendication 1, dans laquelle le déshydratant est présent et comprend de la silice, un gel de silice, du silicate de magnésium et d'aluminium, de l'oxyde de calcium, du sulfate de calcium, du sulfate de magnésium, du pentoxyde de phosphore, de l'argile smectite, de l'argile phyllosilicate en feuillets, une argile organiquement modifiée, une argile intercalée, une argile exfoliée, ou une combinaison de ceux-ci.

13. Alimentation en combustible selon la revendication 1, dans laquelle le matériau en contact avec le combustible comprend de l'iode.

14. Alimentation en combustible selon la revendication 2, dans laquelle le matériau en contact avec le combustible est disposé à l'intérieur ou sur une surface intérieure du conteneur de combustible.

15. Alimentation en combustible selon la revendication 3, dans laquelle le matériau en contact avec le combustible est disposé à l'intérieur ou sur une surface du boîtier extérieur.

16. Alimentation en combustible selon la revendication 1, dans laquelle le matériau en contact avec le combustible forme une partie d'une valve.

17. Alimentation en combustible selon la revendication 9 comprenant en outre au moins un photo-initiateur.

18. Alimentation en combustible selon la revendication 17, dans laquelle le photo-initiateur est sélectionné dans le groupe comprenant de la benzophénone, de la o-méthoxy-benzophénone, un dibenzoyl biphényle, un dibenzoyl biphényle substitué, un terphényle benzoylé, un terphényle benzoylé substitué, un triphénylbenzène tribenzoylé, un triphénylbenzène tribenzoylé substitué, des oligomères de styrène benzoylés, des oligomères de styrène benzoylés substitués, de l'acétophénone, de l'o-méthoxy-acétophénone, de l'acétophénone, de la méthyl éthyl cétone, de la valérophénone, de l'hexanophénone, de l'α-phényl-butyrophénone, de la p-morpholinopropiophénone, de la dibenzosubérone, de la 4-morpholinobenzophénone, de la benzoïne, du méthyl éther de benzoïne, de la 4-o-morpholinodéoxybenzoïne, du p-diacétylbenzène, de la 4- aminobenzophénone, de la 4'-méthoxyacétophénone, des anthraquinones substituées et non substituées, de l'α-tétralone, de la 9-acétylphénanthrène, de la 2-acétylphénanthrène, de la 10-thioxanthénone, de la 3-acétyl-phénanthrène, de la 3-acétylindole, de la 9-fluorénone, de la 1-indanone, du 1,3,5-triacétylbenzène, de la thioxanthèn-9-one, de la xanthène-9-one, de la 7-H-benz[de]anthracèn-7-one, du tétéahydropyranyl éther de benzoïne, de la 4,4'-bis(diméthylamino)-benzophénone, de la 1'-acétonaphthone, de la 2'-acétonaphthone, de l'acétonaphthone and de la 2,3-butanedione, de la benz[a]anthracène-7,12-dione, de la 2,2-diméthoxy-2-phénylacétophénone, de la α,α-diéthoxy- acétophénone, de la α,α-dibutoxyacétophénone, du Rose de Bengale, du bleu de méthylène, de la tétraphényl phosphine, du poly(éthylène-co-monoxyde de carbone), et de l'oligo[2-hydroxy-2-méthyl-I-[4-(1-méthylvinyl)phényl]propanone].

19. Alimentation en combustible selon la revendication 9 comprenant en outre au moins un antioxydant.

20. Alimentation en combustible selon la revendication 19, dans laquelle l'antioxydant est sélectionné dans le groupe comprenant du 2,6-di(t-butyl)-4-méthylphénol, du 2,2'-méthylène-bis(6-t-butyl-p-crésol), du triphénylphosphite, du tris-(nonylphényl)phosphite, de la vitamine E, du tétra-bisméthylène 3-(3,5-ditertbutyl-4-hydroxyphényl)-propionate méthane, et du dilaurylthiodipropionate.
